(19) Europäisches Patentamt
European Patent Office
Office européen des brevets

(11) Veröffentlichungsnummer: **0 148 496**
**A2**

# (12) EUROPÄISCHE PATENTANMELDUNG

(21) Anmeldenummer: **84116200.1**

(22) Anmeldetag: **22.12.84**

(51) Int. Cl.⁴: **C 09 B 67/26**, D 06 P 1/382
// C09B62/245, C09B67/54

(30) Priorität: **07.01.84 DE 3400412**

(43) Veröffentlichungstag der Anmeldung: **17.07.85**
**Patentblatt 85/29**

(84) Benannte Vertragsstaaten: **CH DE FR LI**

(71) Anmelder: **BAYER AG, Konzernverwaltung RP**
**Patentabteilung, D-5090 Leverkusen 1 Bayerwerk (DE)**

(72) Erfinder: **Wolff, Joachim, Dr., Neuenhauserweg 6,**
**D-5060 Bergisch-Gladbach (DE)**
Erfinder: **Wolf, Karlheinz, Dr., Paul-Klee-Strasse 77,**
**D-5090 Leverkusen (DE)**
Erfinder: **Wegner, Peter, Dr., Geibelstrasse 9,**
**D-5090 Leverkusen (DE)**

(54) **Lagerstabile Lösungen von Reaktivfarbstoffen.**

(57) Lagerstabile konzentrierte wäßrige Lösungen von pyrimidinreaktivgruppenhaltigen Azofarbstoffen des I-Säure-Typs werden erhalten, wenn man als Lösungsvermittler eine Mischung aus Harnstoff mit N-Methylharnstoff und/oder N,N'-Dimethylharnstoff verwendet.

EP 0 148 496 A2

BAYER AKTIENGESELLSCHAFT 5090 Leverkusen, Bayerwerk
Zentralbereich
Patente, Marken und Lizenzen Er/K/Ke-c

Lagerstabile Lösungen von Reaktivfarbstoffen

Die vorliegende Erfindung betrifft wäßrige Lösungen von pyrimidinreaktivgruppenhaltigen Azofarbstoffen vom I-Säure-Typ, die als Lösungsvermittler Harnstoff - und Harnstoff-Derivate enthalten.

Von einigen in Wasser besonders gut löslichen Reaktivfarbstoffklassen abgesehen, bereitet die Herstellung von konzentrierten ($\geq$10 Gew.-% Reinfarbstoff), lagerstabilen Farbstofflösungen immer wieder große Schwierigkeiten.

Es ist daher bereits vorgeschlagen worden, zur Löslichkeitsverbesserung Carbonsäuren, Glykole, Glykolether, Carbonsäureamide, Sulfone, Sulfoxide sowie auch Harnstoff und dessen Derivate (vgl. z.B. DE-A 2 458 580) bei der Herstellung solcher Lösungen einzusetzen.

Es ist bislang jedoch nicht gelungen, im ausreichendem Maße praxisstabile Färbepräparationen von pyrimidinreaktivgruppenhaltigen Azofarbstoffen von I-Säure-Typ unter Zusatz von Lösungsvermittlern herzustellen.

Es wurde nun überraschenderweise gefunden, daß sich auch die pyrimidinreaktivgruppenhaltigen Azofarbstoffe von I-Säure-Typ in konzentrierte Lösungen überführen lassen, wenn man Mischungen aus Harnstoff mit N-Methylharnstoff und/oder vorzugsweise N,N'-Dimethylharnstoff als Lösungsvermittler verwendet, wobei das Mischungsverhältnis 5:1 bis 1:20 beträgt. Vorzugsweise werden Gemische im Gewichtsverhältnis von 5:1 - 1:16, insbesondere 5:1 - 1:7, eingesetzt. Die Gewichtsverhältnisse beziehen den jeweils auf das Verhältnis Harnstoff : subst. Harnstoff.

Diese Hilfsmittelgemische eignen sich insbesondere zur Herstellung lagerstabiler Lösungen von Farbstoffen, die in Form der freien Säure der Formel

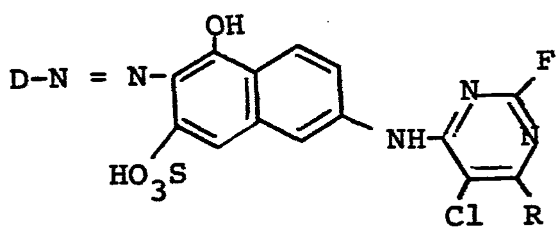

(I)

entsprechen,

worin D für eine sulfogruppenhaltige Diazokomponente der Benzol- oder Naphthalinreihe und R für F oder $CH_3$ stehen.

Besonders bevorzugt ist die Herstellung von Lösungen von Farbstoffen, die in Form der freien Säure der Formel

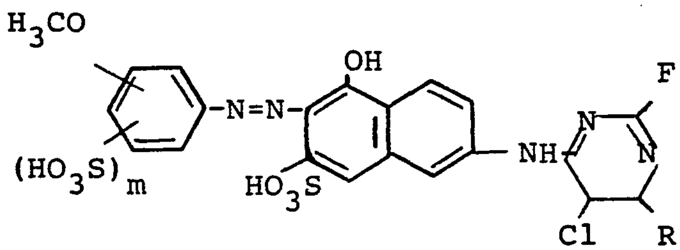

(II)

(m = 1 oder 2)

entsprechen.

Im allgemeinen liegen die Farbstoffe in den Lösungen nicht als freie Säure, sondern in Form ihrer Salze, insbesondere Alkali- und Ammoniumsalze vor. Bevorzugt sind $Na^{\pm}$-, $Li^{\oplus}$- und $NH_4^+$-Salze.

Die erfindungsgemäßen Reaktivfarbstofflösungen haben im allgemeinen folgende Zusammensetzung:

| | | |
|---|---|---|
| 10 - 25 %, | vorzugsweise 12 - 20 %, | Reinfarbstoff |
| 10 - 45 %, | vorzugsweise 20 - 40 % | Harnstoffgemisch |
| 0,05 - 5 %, | vorzugsweise 0,1 - 1 % | Puffersubstanz für pH 4,5 - 8 |
| 0,05 - 5 %, | vorzugsweise 0,1 - 3 % | anorganische Salze |
| Rest bis 100 % | | Wasser |

(% = Gew.-%)

Vorteilhafterweise verwendet man zur Herstellung der Lösungen solche Farbstoffe, die einen möglichst geringen (zumeist synthesebedingten) Anteil an anorganischen

Salzen (Sulfate, Chloride etc.) aufweisen. Solche salzarmen Produkte kann man auf verschiedene Weise erhalten:

a) Der salzhaltige Preßkuchen bzw. die getrocknete salzhaltige Fabrikware wird mehrfach mit destilliertem Wasser gewaschen und erneut isoliert.

b) Der bei der Synthese anfallende Farbstoffslurry wird mittels Druckpermeation entsalzt und aufkonzentriert (vgl. DE-A 2 948 292).

c) Daß man den Reaktivfarbstoff, ausgehend von dem entsprechenden reaktivgruppenfreien Aminofarbstoff, der als solcher bereits salzarm ist, herstellt, etwa gemäß DE-A 3 207 534. Zur Herstellung der erfingungsgemäßen Lösungen werden dann die salzarmen Farbstoffpreßkuchen bzw. -dispersionen mit dem Harnstoffgemisch und den Puffersubstanzen sowie gegebenenfalls anderen Hilfsmitteln (z.B. mit Wasser mischbaren organischen Lösungsmitteln) versetzt. Sie sind direkt gebrauchsfertig. Die erhaltenen Lösungen zeichnen sich durch eine monatelange Lagerstabilität bei Temperaturen von -10°C bis 30°C aus. Mittelfristig (ca. 4 Wochen) sind die Lösungen auch bei Temperaturen von 40°C bis 45°C stabil.

Beispiel 1

0,3 mol des sauren Azofarbstoffs

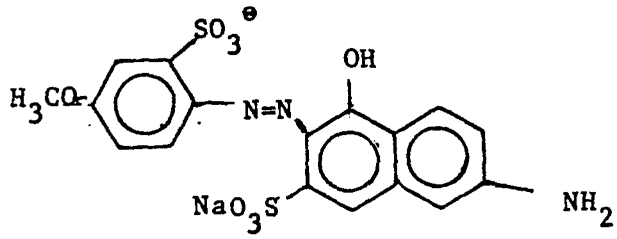

werden in 340 ml Wasser, 138 g N,N'-Dimethylharnstoff, 154 g Harnstoff dispergiert und mit $LiOH.H_2O$ auf pH = 6 gestellt. Nach Zugabe von 1,2 g einer Fällungskieselsäure mit einer Oberfläche von 200 m²/g und 190 g Eis wird mit 0,36 mol 2.4.6-Trifluor-5-chlorpyrimidin in Gegenwart einer Mischung aus 3,5 g $Li_2CO_3$ und 11 g $CaCO_3$ im leicht sauren Bereich kondensiert. Nach beendeter Reaktion werden weitere 54 g Harnstoff, 27 g N,N'-Dimethylharnstoff zugegeben und filtriert. Man erhält eine lagerstabile Reaktivfarbstofflösung, die nach Zusatz der für die Reaktivfärberei üblichen Hilfsmittel natürliche und regenierierte Cellulosefasern in rot - orange Tönen färbt.

Beispiel 2

0,3 mol des Azoreaktivfarbstoffs der Formel

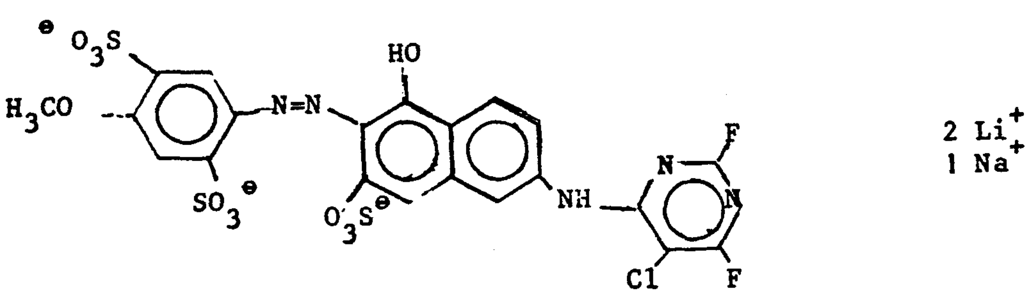

mit einem Salzgehalt ≤ 4 Gew.-% werden in einem Gemisch aus 95 g N,N'-Dimethylharnstoff, 190 g Harnstoff und 480 g Wasser bei pH = 8 gelöst. Man erhält nach Zugabe von 0,5 Gew.-% $NaHCO_3$ eine lagerstabile Lösung, die nach Zusatz der für die Reaktivfärberei üblichen Hilfsmittel natürliche und regenerierte Cellulosefasern in rot - orangen Tönen färbt.

Beispiel 3

0,3 mol des sauren Azofarbstoffs

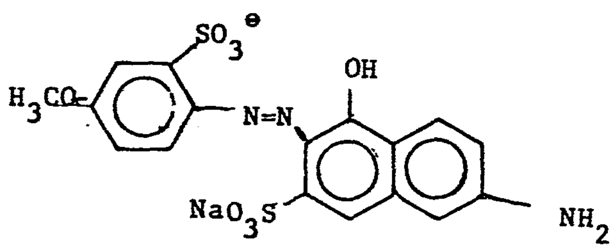

werden in 340 ml Wasser, 200 g Methylharnstoff, 80 g Harnstoff dispergiert und mit $LiOH.H_2O$ auf pH = 6 gestellt. Nach Zugabe von 1,2 g einer Fällungskieselsäure mit einer Oberfläche von 200 m²/g und 180 g Eis wird mit 0,36 mol 2.4.6-Trifluor-5-chlorpyrimidin in Gegenwart einer Mischung aus 3,5 g $Li_2CO_3$ und 11 g $CaCO_3$ im leicht sauren Bereich kondensiert. Nach beendeter Reaktion werden weitere 54 g Harnstoff, 27 g Methylharnstoff zugegeben und filtriert. Man erhält eine lagerstabile Reaktivfarbstofflösung, die nach Zusatz der für die Reaktivfärberei üblichen Hilfsmittel natürliche und regenerierte Cellulosefasern in rot - orangen Tönen färbt.

0148496

Patentansprüche

1. Lagerstabile konzentrierte wäßrige Lösungen von pyrimidinreaktivgruppenhaltigen Azofarbstoffen des I-Säure-Typs, dadurch gekennzeichnet, daß diese eine Mischung aus Harnstoff mit N-Methylharnstoff und/oder N,N'-Dimethylharnstoff als Lösungsvermittler enthalten, wobei das Mischungsverhältnis 5:1 bis 1:20 beträgt.

2. Lagerstabile Lösungen gemäß Anspruch 1, dadurch gekennzeichnet, daß als Farbstoffe solche eingesetzt werden, die in Form der freien Säure der Formel

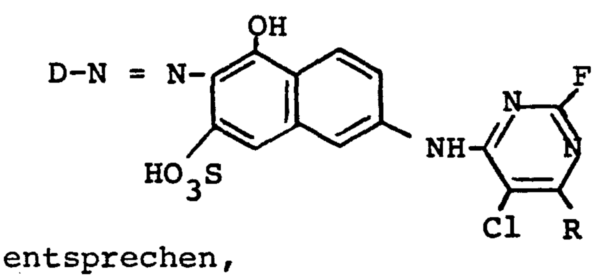 (I)

entsprechen,

worin D für eine sulfogruppenhaltige Diazokomponente der Benzol- oder Naphthalinreihe und R für F oder $CH_3$ stehen.

3. Lagerstabile Lösungen gemäß Anspruch 1, dadurch gekennzeichnet, daß als Farbstoffe solche eingesetzt werden, die in Form der freien Säure der Formel

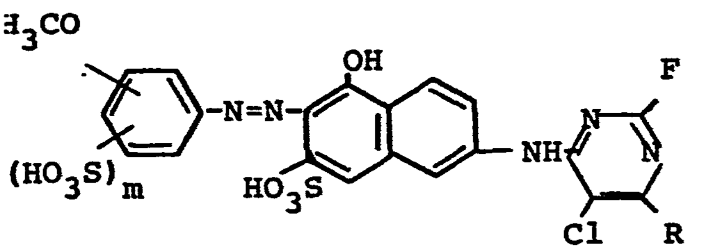

(II)

(m = 1 oder 2)

entsprechen.

4. Lagerstabile Lösungen gemäß Anspruch 1, dadurch gekennzeichnet, daß die Verbindung der Formel

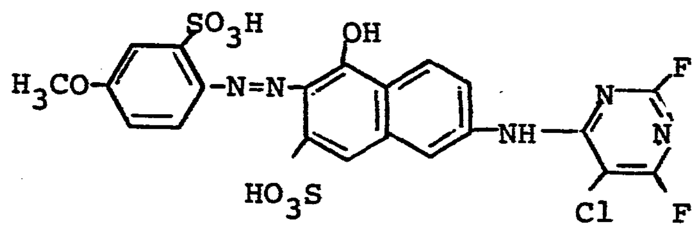

bevorzugt als deren Na-, $NH_4^+$- oder Li-Salz als Farbstoff eingesetzt wird.

5. Lagerstabile Lösungen gemäß Anspruch 1, dadurch gekennzeichnet, daß das Mischungsverhältnis der Harnstoffe 5:1 bis 1:7 beträgt.

6. Lagerstabile Lösungen gemäß Anspruch 1, dadurch gekennzeichnet, daß der Farbstoffanteil 12 - 20 Gew.-% und der Anteil des Harnstoffgemisches 20 - 40 Gew.-% beträgt.

7. Verwendung der lagerstabilen Lösungen gemäß Anspruch 1, zur Zubereitung von Färbebädern und Druckpasten für natürliche und synthetische Substrate.